# EUROPÄISCHE PATENTSCHRIFT

(11) **EP 3 365 138 B1**
(45) Veröffentlichungstag und Bekanntmachung des Hinweises auf die Patenterteilung: **19.02.2020**
(21) Anmeldenummer: 16788051.7
(22) Anmeldetag: 20.10.2016
(51) Int. Cl.: B25H 5/00, B25G 1/10, B65G 1/10

(54) **SELBSTFAHRENDE LAGEREINRICHTUNG**
SELF-DRIVING STORAGE DEVICE
ÉQUIPEMENT D'ENTREPOSAGE AUTONOME

(30) Priorität: 20.10.2015 DE 102015220428
(43) Veröffentlichungstag der Anmeldung: 29.08.2018
(73) Patentinhaber: Universität Stuttgart, 70174 Stuttgart (DE)
(72) Erfinder: WEHKING, Karl-Heinz, 70469 Stuttgart (DE); HOFMANN, Matthias, 73333 Gingen (DE); SCHROEPPEL, Markus, 70736 Fellbach (DE)
(74) Vertreter: DREISS Patentanwälte PartG mbB
(86) Internationale Anmeldenummer: PCT/EP2016/075268
(87) Internationale Veröffentlichungsnummer: WO 2017/068063

(56) Entgegenhaltungen:
- EP-A1- 1 449 794
- EP-A1- 2 062 837
- EP-A1- 2 476 635
- EP-A2- 0 268 965
- DE-A1- 19 848 274
- DE-A1-102012 020 973
- FR-A1- 2 675 785
- US-A1- 2012 006 765

## Beschreibung

Die Erfindung betrifft eine selbstfahrende Lagereinrichtung und ein Materialflusssystem umfassend eine derartige Lagereinrichtung.

In Bereich der weitgehend automatisierten Fertigung von Verbrauchsgütern, insbesondere in der Fertigung von Kraftfahrzeugen, ist es bekannt, die teil- oder endmontierten Verbrauchsgüter oder Kraftfahrzeuge in einem vergleichsweise starren Produktionsablauf in einer Fertigungslinie oder auf einem Fließband herzustellen.

Aufgrund der immer kürzeren Produktzyklen und der weiter wachsenden Produktvielfalt kann die erwünschte Flexibilität mit den bestehenden Fertigungslinien und Fließbändern jedoch nicht gewährleistet werden.

Darüber hinaus ist bei Montageprozessen auf bestehenden Fertigungslinien oder Fließbändern in der Fließbandarbeit eine Behebung von Mängeln aufgrund der vorgegebenen Takt- oder Zykluszeiten nur schwer möglich. Für den Fall, dass die erforderliche Nacharbeit die verbleibende Takt- oder Zykluszeit überschreitet, kann die Nacharbeit nicht ohne einen Stopp des kompletten Fließbandes bewerkstelligt werden. Ein Ausschleusen eines Kraftfahrzeugs aus der Fertigungslinie bzw. vom Fließband ist mit den bestehenden Materialflusssystemen jedoch ebenfalls nicht möglich. Ein Bandstopp des Fließbandes für die Durchführung der Nacharbeit ist dagegen sehr teuer und in jedem Falle zu vermeiden.

Aus diesem Grunde werden Nacharbeiten in der Fließbandmontage in der Regel nach der komplettierten Endmontage eines Kraftfahrzeugs durchgeführt. Ein neues Materialflusssystem, basierend auf fahrerlosen Transportfahrzeugen, soll eine Entkopplung der zu fertigenden Güter bewirken und damit eine Aufhebung der starren Taktzeiten. Als mobiler Montageträger kann dabei z.B. ein in der DE 10 2015 214980.3 genannter Montageträger dienen. Das Materialflusssystem, vor allem die Teilebereitstellung soll ebenfalls durch fahrerlose Transportfahrzeuge erfolgen. Trotz der hohen Variantenvielfalt kann so gewährleistet werden, dass alle für ein zu produzierendes Fahrzeug benötigten Bauteile mittels geeigneter Flurförderfahrzeuge in die Fertigungslinie transportiert werden und trotz eines zuvor aufgetretenen Fehlers am fehlerbehafteten Fahrzeug montiert werden. Ein Kraftfahrzeug, bei dem im Montageprozess ein Fehler aufgetreten ist und folglich eine Nacharbeit notwendig ist, wird bislang endmontiert und erst nach dem Ende des Montageprozesses wird die erforderliche Nacharbeit zur Fehlerbehebung durchgeführt. Eine selbstfahrende Lagereinrichtung ist in US 2012/006765 A1 offenbart.

Ist folglich ein Fehler in einem vergleichsweise frühen Montageschritt aufgetreten, ist es möglich, dass ein Kraftfahrzeug größtenteils wieder zerlegt werden muss, um den oder die Fehler zu beheben. Ein solches Vorgehen ist jedoch ebenfalls äußerst aufwendig.

Der Erfindung liegt daher die Aufgabe zugrunde, eine Lagereinrichtung und ein Materialflusssystem bereitzustellen, bei denen die genannten Nachteile vermieden werden, insbesondere eine Lagereinrichtung und ein Materialflusssystem bereitzustellen, mit denen eine flexiblere Produktion sowie ein Ausschleusen fehlerbehafteter teil- oder endmontierter Verbrauchsgüter, insbesondere teil- oder endmontierter Kraftfahrzeuge ermöglicht wird.

Diese Aufgabe wird durch eine selbstfahrende Lagereinrichtung mit den Merkmalen des Anspruchs 1 gelöst. Die selbstfahrende Lagereinrichtung zum Einlagern und/oder zum Transport von insbesondere Karosseriebauteilen von Kraftfahrzeugen, insbesondere von Bodenmodulen von Kraftfahrzeugen, oder von end- oder teilmontierten Kraftfahrzeugen, umfasst ein Bodenelement und eine auf dem Bodenelement angeordneten Tragstruktur, die zur Aufnahme der Karosseriebauteile oder der end- oder teilmontierten Kraftfahrzeuge ausgelegt ist und eine Mehrzahl von Lagerplätzen mit verlagerbaren Lagerbodenelementen aufweist, wobei die Lagereinrichtung eine am Bodenelement angeordnete Verfahreinrichtung aufweist, die derart ausgelegt ist, dass die Lagereinrichtung selbstfahrend, insbesondere flurgebunden, omnidirektional bewegt werden kann. Vorteilhafterweise ist die Tragstruktur fachwerkartig ausgebildet, so dass eine ausreichende Stabilität für die Aufnahme der Karosseriebauteile oder der end- oder teilmontierten Kraftfahrzeuge gewährleistet werden kann. Durch Vorsehen einer selbstfahrenden Lagereinrichtung mit einer Verfahreinrichtung mittels derer die Lagereinrichtung selbstfahrend omnidirektional bewegt werden kann, ist es möglich, die Lagereinrichtung in ein Materialflusssystem einzubinden, bei dem Karosseriebauteile oder end- oder teilmontierte Kraftfahrzeuge auf selbstfahrenden Flurförderfahrzeugen oder sogenannten fahrerlosen Transportfahrzeugen (FTF) bewegt werden, wobei ein Ein- oder Ausschleusen der Karosseriebauteile oder der end- oder teilmontierten Kraftfahrzeuge in oder aus dem Produktionsprozess auf einfache Art und Weise ermöglicht werden kann, da auf einen starren Produktionsprozess, der beispielsweise durch ein Fließband vorgegeben ist, verzichtet werden kann. Karosseriebauteile oder end- oder teilmontierte Kraftfahrzeuge können auf den verlagerbaren Lagerbodenelementen der selbstfahrenden Lagereinrichtung angeordnet werden und an die jeweiligen Lagerplätze verlagert werden. Vorteilhafterweise ist die Lagereinrichtung derart ausgebildet, dass jeder Lagerplatz eine Tragfähigkeit von wenigstens 3 Tonnen aufweist und dass jeder Lagerplatz eine horizontale Erstreckung von wenigstens 5,5 Metern auf wenigstens 2,5 Metern aufweist, so dass fertig montierte Fahrzeuge, insbesondere Personenkraftwagen (PKW) darin eingelagert und mit der gesamten Lagereinrichtung verfahren werden können.

Die Erfindung sieht vor, dass die Tragstruktur einen Hebeturm mit einer Hebeeinrichtung zum vertikalen Verfahren der Lagerbodenelemente und zwei auf jeweils gegenüberliegenden Seiten des Hebeturms angeordnete Lagertürme umfasst, wobei die Lagertürme die Lagerplätze aufweisen. Mit der Hebeeinrichtung können folglich die Lagerbodenelemente, auf denen Karosseriebauteile oder end- oder teilmontierte Kraftfahrzeuge angeordnet werden können, vertikal verfahren werden und an ihrer jeweiligen vertikalen Position an einem Lagerplatz eines Lagerturms gelagert werden.

Erfindungsgemäß ist pro Lagerturm wenigstens ein Lagerbodenrahmen vorgesehen, wobei die Tragstruktur vertikale Führungsschienen zur Führung des Lagerbodenrahmens aufweist. Dabei ist es besonders vorteilhaft, wenn der Lagerbodenrahmen derart ausgelegt ist, dass das Lagerbodenelement auf dem Lagerbodenrahmen derart anordenbar ist, so dass eine sichere Lagerung eines Karosseriebauteils oder eines end- oder teilmontierten Kraftfahrzeugs, welches auf einem Lagerbodenelement angeordnet ist, ermöglicht werden kann. Vorteilhafterweise ist dabei ein formschlüssiger Lagerbodenhorizontalantrieb vorgesehen, der eine formschlüssige Verriegelung aufweist, die zur Lagesicherung des jeweiligen Lagerbodenelements ausgelegt ist, bspw. bei Ausfall einer Blockierwirkung des Antriebs, bspw. im stromlosen Zustand des Antriebs.

Es ist auch denkbar, mehrere Lagerbodenrahmen vorzusehen. Wenn lediglich ein Lagerbodenrahmen vorgesehen ist, weist die Lagereinrichtung pro Lagerturm lediglich zwei Lagerplätze auf. Wenn 2 Lagerböden vorgesehen sind, weist die Lagereinrichtung pro Lagerturm 3 Lagerplätze auf, bei 3 Lagerböden 4 Lagerplätze usw. Vorteilhafterweise entspricht dabei die Anzahl der Lagerplätze der Anzahl der Lagerbodenrahmen im jeweiligen Lagerturm zuzüglich des Lagerplatzes im Bodenelement der Lagereinrichtung.

Erfindungsgemäß ist wenigstens ein Lagerbodenvertikalantrieb vorgesehen, der derart ausgelegt ist, dass der wenigstens eine Lagerbodenrahmen im Lagerturm vertikal verlagerbar ist. Wenn mehrere Lagerbodenrahmen im Lagerturm vorgesehen sind, sind vorteilhafterweise mehrere Lagerbodenvertikalantriebe vorgesehen, die vorzugsweise unabhängig voneinander derart ansteuerbar sind, dass die verschiedenen Lagerbodenrahmen unabhängig voneinander verlagerbar sind. Somit kann ermöglicht werden, dass in einem Lagerturm verschiedene vertikale Abstände der Lagerbodenrahmen zueinander eingerichtet werden können. Somit können Lagerplätze mit voneinander verschiedenen Höhen bereitgestellt werden, so dass bspw. für ein endmontiertes Fahrzeug eine größere Höhe eingestellt werden kann als für einzelne Karosseriebauteile wie bspw. ein Bodenmodul eines Kraftfahrzeugs.

Besonders bevorzugt ist es dabei, wenn der Lagerbodenvertikalantrieb ein Zahnstangenantrieb ist. Dabei ist es denkbar, Zahnstangen in den vertikalen Führungsschienen der Tragstruktur anzuordnen, wobei an jedem Lagerbodenrahmen ein bspw. elektrischer Antrieb mit einem in der Zahnstange kämmenden Ritzel vorgesehen sein kann, mittels dem eine vertikale Verlagerung des Lagerbodenrahmens bewerkstelligt werden kann. Das am Lagerboden angeordnete Zahnrad greift dann in die an der vertikalen Tragstruktur angeordnete Zahnstange derart ein, dass der Lagerbodenrahmen in einer vertikalen Richtung einerseits relativ gegenüber dem Bodenelement, andererseits aber auch relativ gegenüber anderen Lagerbodenrahmen verfahren werden kann, so dass eine freie Anpassbarkeit der Fachboden- und/oder Lagerplatzhöhe entsprechend dem Einlagerungsgegenstand realisiert werden kann. Dabei ist es bspw. denkbar, die Lagereinrichtung durch eine geringe Fachboden- und/oder Lagerplatzhöhe an die Einlagerung von Sportwagen anzupassen, oder die Lagereinrichtung durch eine große Fachboden- und/oder Lagerplatzhöhe an die Einlagerung von Geländewagen anzupassen.

Erfindungsgemäß ist vorgesehen, dass ein Lagerbodenhorizontalantrieb vorgesehen ist, der derart ausgelegt ist, dass ein Lagerbodenelement horizontal von der Hebeeinrichtung an einen Lagerplatz verlagerbar ist. Somit kann ein Lagerbodenelement mittels der Hebeeinrichtung an eine vertikale Lagerposition verlagert werden und dann mittels des Lagerbodenhorizontalantriebs an einen Lagerplatz auf einem Lagerbodenrahmen eines Lagerturms horizontal verlagert werden. Vorteilhafterweise ist der Lagerbodenhorizontalantrieb derart ausgebildet, dass sowohl an der Hubplattform, als auch am Lagerbodenrahmen eine Linearführung angeordnet ist. Es ist denkbar, dass der Lagerbodenhorizontalantrieb kraft- oder formschlüssig ausgebildet ist. Besonders bevorzugt ist es dabei, wenn der Lagerbodenhorizontalantrieb ein Zahnstangenantrieb ist. Dabei ist es denkbar, Zahnstangen horizontal auf der Hebeeinrichtung und auf den Lagerbodenrahmen anzuordnen, wobei an einer Unterseite der Lagerbodenelemente jeweils ein in den Zahnstangen kämmendes Ritzel, das von einem bspw. elektrischen Antrieb antreibbar ist, vorgesehen sein kann. Somit kann durch Antreiben des Ritzels ein horizontales Verfahren oder Verlagern der Lagerbodenelemente ermöglicht werden. Im Falle eines derartigen, formschlüssigen Lagerbodenhorizontalantriebs ist die Linearführung als Zahnstange ausgebildet, wobei durch den formschlüssigen Antrieb eine Lagesicherung gewährleistet werden kann. Dabei ist es denkbar, zusätzlich zur Lagesicherung durch die Zahnstange eine formschlüssige Blockierung vorzusehen. Somit kann für den Fall, dass ein das Ritzel antreibender Elektromotor, der am Lagerbodenelement angeordnet ist, stromlos ist, eine redundante Sicherung gewährleistet werden. Eine horizontale Verlagerung der Lagerbodenelemente kann erfolgen, wenn die bspw. als Zahnstangen ausgebildeten Linearführungen horizontal fluchtend angeordnet sind. Ein horizontales Fluchten der Linearführungen kann durch die Lagerbodenvertikalantriebe erreicht werden, wobei bspw. optische Sensoren vorgesehen sein können, welche zur Detektion der vertikalen Position der Lagerbodenrahmen und somit auch der Linearführungen ausgelegt sind. Die Sensoren können ferner derart ausgelegt sein, dass sie bei Detektion des vertikalen Fluchtens der Linearführungen ein Stoppsignal ausgeben, sodass ein das Ritzel des Zahnstangenantriebs antreibender Elektromotor des Lagerbodenvertikalantriebs angehalten wird. Wenn die Linearführungen vertikal fluchten kann dann ein Lagerbodenelement mit dem Lagerbodenhorizontalantrieb horizontal verfahren werden.

Zur automatisierten Be- oder Entladung der selbstfahrenden Lagereinrichtung ist es besonders vorteilhaft, wenn die Hebeeinrichtung eine Hubplattform umfasst und derart ausgelegt ist, dass die Hubplattform vertikal zwischen einer Beladeposition und wenigstens einer Lagerposition verfahrbar ist. In der Beladeposition, welche vorzugsweise in der Nähe des Bodenelements angeordnet ist, können Karosseriebauteile oder end- oder teilmontierte Kraftfahrzeuge in die Lagereinrichtung eingelagert werden, wobei dann ein vertikales Verfahren im Hebeturm an eine vertikale Lagerposition ermöglicht wird, an der dann mittels des Lagerbodenhorizontalantriebs ein Verlagern des Lagerbodenelements auf einen Lagerbodenrahmen in horizontaler Richtung ermöglicht werden kann.

Als besonders vorteilhaft hat es sich dabei erwiesen, wenn die Hebeeinrichtung einen Seil- oder Kettenantrieb aufweist. Ferner ist es denkbar, dass die Hebeeinrichtung einen formschlüssigen Vertikalantrieb aufweist, wobei dieser Vertikalantrieb ebenfalls als Zahnstangenantrieb ausgebildet sein kann. Ein derartiger Zahnstangenantrieb kann ebenfalls wenigstens eine Zahnstange und wenigstens ein in der Zahnstange kämmendes Ritzel umfassen, welches von einem Elektromotor angetrieben wird. Um Bauraum zu sparen, ist es jedoch bevorzugt, wenn die Hebeeinrichtung einen Seil- oder Kettenantrieb aufweist. Vorteilhafterweise sind an einem oberen Ende des Hebeturms Antriebseinheiten des Seil- oder Kettenantriebs angeordnet, wobei Kettentrume vorgesehen sind, die in den Stützen oder Führungsschieben des Hebeturmes angeordnet sind. Als besonders vorteilhaft hat es sich erwiesen, wenn als Antriebseinheit zwei Getriebemotoren vorgesehen sind, die auf den jeweiligen, den Lagertürmen zugewandten Seiten des Hebeturms angeordnet sind und auf eine zentrale Antriebswelle wirken.

Dadurch kann die Hebeeinrichtung räumlich von der Hubplattform getrennt werden, so dass eine Bauhöhe der Hubplattform reduziert werden kann. Daher kann die Hubplattform besonders flach ausgebildet sein, so dass sich die Hubplattform in der Beladeposition in unmittelbarer Nähe des Bodenelements befindet. Somit können teil- oder endmontierte Fahrzeuge, insbesondere Personenkraftwagen (PKW), an denen bereits Räder angebracht sind, in der Beladeposition der Hubplattform durch am Bodenelement angeordnete und aus diesem ausfahrbare Rampenkeile ohne zusätzliche Hubvorrichtungen auf die Hubplattform gerollt werden bzw. in die Hubplattform hineingefahren werden. Es ist ferner denkbar, an den untersten Lagerplätzen der Lagertürme der selbstfahrenden Lagereinrichtung ebenfalls ausfahrbare Rampenkeile vorzusehen, die am Bodenelement angeordnet sind und aus diesem ausfahrbar sind, so dass die untersten Lagerplätze direkt und ohne Verwendung der Hebeeinrichtung beladen werden können.

Besonders bevorzugt ist es ferner, wenn der Hebeturm Führungsschienen zur Führung der Hubplattform aufweist.

Eine weitere besonders vorteilhafte Ausgestaltung der Lagereinrichtung sieht vor, dass die Verfahreinrichtung zur Einbindung in ein Materialflusssystem ausgelegt ist. Vorteilhafterweise weist die Verfahreinrichtung dabei eine Einrichtung zur Standortbestimmung und zur Lageerfassung, sowie Einrichtungen zur Datenübertragung mit einer Leitsteuerung eines Materialflusssystems auf.

Eine weitere vorteilhafte Ausgestaltung der selbstfahrenden Lagereinrichtung sieht vor, dass die Verfahreinrichtung wenigstens drei Schwenkantriebe, vorzugsweise mindestens sechs Schwenkantriebe aufweist. Die Schwenkantriebe können dabei auf einer der Tragstruktur abgewandten Seite des Bodenelements angeordnet sein. Es ist denkbar, Schwenkantriebe zu verwenden, die bspw. zum Antrieb von Vierwegegabelstaplern eingesetzt werden können, wobei jeder Schwenkantrieb einen eigenen elektrischen Antrieb aufweist. Die Anzahl der Schwenkantriebe kann abhängig von der Anzahl der Lagerplätze und somit abhängig von der Nutzlast der selbstfahrenden Lagereinrichtung gewählt werden. Die Schwenkantriebe können derart ausgebildet sein, dass sie als kombinierte Fahr- und Lenkantriebe ausgebildet sind. Dabei ist es denkbar, die Antriebsachsen als Drehschemel-Differentialantriebe auszubilden. Es ist jedoch auch denkbar, die Fahr- und Lenkfunktion antriebsseitig voneinander getrennt auszubilden, wobei ein Antrieb ausschließlich als Fahrantrieb dient und wobei ein weiterer Antrieb ausschließlich als Lenkantrieb dient, bspw. indem in Motor auf einen Drehkranz wirkt.

Besonders vorteilhaft ist es dabei, wenn die Schwenkantriebe unabhängig voneinander ansteuerbar und/oder verschwenkbar sind. Somit kann ermöglicht werden, die selbstfahrende Lagereinrichtung bei minimalem Platzbedarf zu manövrieren oder gar auf der Stelle zu drehen. Statt der Verwendung von Schwenkantrieben ist jedoch auch die Verwendung von bspw. Ketten- oder Raupenantrieben denkbar.

Zur Beladung der Lagereinrichtung mit Karosseriebauteilen oder end- oder teilmontierten Kraftfahrzeugen ist es besonders vorteilhaft, wenn die Lagereinrichtung wenigstens eine Beladeeinrichtung aufweist, die zur Anordnung auf einem Lagerbodenelement ausgebildet ist. Besonders bevorzugt ist es dabei, wenn die Beladeeinrichtung zur Beladung in der Beladeposition ausgebildet ist. Dabei ist es denkbar, dass die Beladeeinrichtung derart ausgebildet ist, dass ein Beladen der untersten Lagerplätze eines Lagerturms direkt mittels der Beladeeinrichtung ohne Verwendung der Hebeeinrichtung ermöglicht werden kann.

Vorteilhafterweise weist die Beladeeinrichtung einen Grundkörper und gegenüber dem Grundkörper teleskopierbar ausfahrbare Teleskoparme auf.

Weiterhin ist es vorteilhaft, wenn die Beladeeinrichtung einen orthogonal zu einer Längserstreckung des Grundkörpers in einer Grundkörpermitte angeordneten und insbesondere orthogonal zur Längserstreckung ausfahrbaren Auflagedorn aufweist und wenn die Beladeeinrichtung an den freien Enden der Teleskoparme orthogonal zur Längserstreckung des Grundkörpers ausfahrbare Auflagezapfen aufweist. Ferner ist es möglich, dass die Beladeeinrichtung derart drehbar gelagert ist, dass eine Drehung der Beladeeinrichtung um eine vertikale Achse ermöglicht werden kann. Somit kann ein Ausfahren der Beladeeinrichtung ermöglicht werden, wobei die Teleskoparme unter ein auf einem fahrerlosen Transportfahrzeug (FTF) angeordnetes Karosseriebauteil oder end- oder teilmontiertes Kraftfahrzeug ausgefahren werden können. Dann kann der Auflagedorn in Anlage mit einem dafür vorgesehenen Auflagepunkt am Karosseriebauteil oder end- oder teilmontierten Kraftfahrzeug zur Anlage gebracht werden, wobei dann Auflagezapfen des fahrerlosen Transportfahrzeugs eingefahren werden können und die Auflagezapfen der Beladeeinrichtung ausgefahren werden können. Folglich kann eine Übergabe vom fahrerlosen Transportfahrzeug auf die Beladeeinrichtung der Lagereinrichtung ermöglicht werden, so dass eine Beladung der Lagereinrichtung ohne zusätzliche Kräne oder ähnliches ermöglicht werden kann.

Die erfindungsgemäße Aufgabe wird auch gelöst durch ein Materialflusssystem mit den Merkmalen des Anspruchs 17. Ein derartiges Materialflusssystem umfasst wenigstens ein fahrerloses Transportfahrzeug (FTF) zum Transport von insbesondere Karosseriebauteilen von Kraftfahrzeugen, insbesondere von Bodenmodulen von Kraftfahrzeugen, oder von end- oder teilmontierten Kraftfahrzeugen, und eine Lagereinrichtung nach wenigstens einem der Ansprüche 1 bis 16.

Besonders bevorzugt ist es dabei, wenn das Materialflusssystem eine Leitsteuerung und eine weitere übergeordnete Infrastruktur aufweist, die dazu ausgelegt ist, ein selbstständiges Verfahren des fahrerlosen Transportfahrzeugs (FTF) und der selbstfahrenden Lagereinrichtung zu ermöglichen.

Somit kann mittels des erfindungsgemäßen Materialflusssystems eine hochflexible Fertigung bereitgestellt werden, bei der fehlerbehaftete end- oder teilmontierte Kraftfahrzeuge einfach aus dem Produktionsprozess aus- oder wieder in den Produktionsprozess eingeschleust werden können. Ferner ist es denkbar, die selbstfahrende Lagereinrichtung aufgrund der wachsenden Variantenvielfalt im Produktionsprozess als selbstfahrendes Regal einzusetzen.

Weitere Einzelheiten und vorteilhafte Weiterbildungen sind der nachfolgenden Beschreibung zu entnehmen, anhand derer eine Ausführungsform der Erfindung näher beschrieben und erläutert ist.

Es zeigen:
- Figur 1: eine Schrägansicht der erfindungsgemäßen selbstfahrenden Lagereinrichtung;
- Figur 2: eine Beladeeinrichtung einer erfindungsgemäßen Lagereinrichtung;
- Figur 3: eine Ausschnitt einer Ausführungsform der erfindungsgemäßen Lagereinrichtung; und
- Figur 4: den Ausschnitt gemäß Figur 3 in vergrößerter Darstellung.

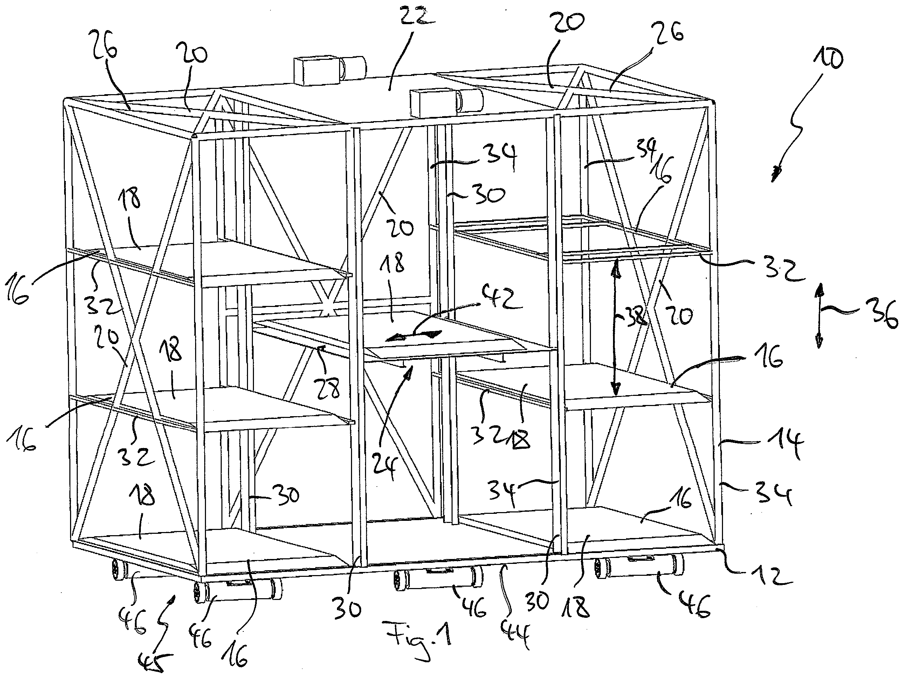

Figur 1 zeigt eine erfindungsgemäße selbstfahrende Lagereinrichtung 10.

Die Lagereinrichtung 10 ist zum Einlagern von Karosseriebauteilen von Kraftfahrzeugen, insbesondere von Bodenmodulen von Kraftfahrzeugen, oder von end- oder teilmontierten Kraftfahrzeugen ausgelegt und weist ein plattenartiges Bodenelement 12 und eine auf dem Bodenelement angeordnete fachwerkartige Tragstruktur 14 auf, die zur Aufnahme der Karosseriebauteile oder der end- oder teilmontierten Kraftfahrzeuge ausgelegt ist und hierzu sechs Lagerplätze 16 mit verlagerbaren Bodenelementen 18 aufweist.

Die fachwerkartige Tragstruktur 14 weist zur Erhöhung der Stabilität Verstrebungen 20 auf.

Ferner umfasst die Tragstruktur 14 einen Hebeturm 22 mit einer Hebeeinrichtung 24 zum vertikalen Verfahren der Lagerbodenelemente 18 und zwei auf jeweils gegenüberliegenden Seiten des Hebeturms 22 angeordnete Lagertürme 26, welche die Lagerplätze 16 aufweisen.

Die Hebeeinrichtung 24 umfasst eine Hubplattform 28. Die Hebeeinrichtung 24 ist derart ausgelegt, dass die Hubplattform 28 vertikal zwischen einer Beladeposition und wenigstens einer Lagerposition verfahrbar ist. Hierzu weist die Hebeeinrichtung 24 einen Seil-oder Kettenantrieb auf. Mittels des Seil- oder Kettenantriebs kann die Hubplattform 28, welche in Führungsschienen 30 des Hebeturms 22 geführt wird, vertikal verfahren werden.

Die Lagereinrichtung 10 umfasst pro Lagerturm 26 zwei Lagerbodenrahmen 32, wobei die Tragstruktur 14 ebenfalls vertikale Führungsschienen 34 zur Führung der Lagerbodenrahmen 32 aufweist. Auf den Lagerbodenrahmen 32 sind die Lagerbodenelemente 18 anordenbar.

In Figur 1 ist ein Lagerbodenrahmen 32 ohne ein Lagerbodenelement 18 gezeigt, wobei das fehlende Lagerbodenelement 18 auf der Hubplattform 28 angeordnet ist.

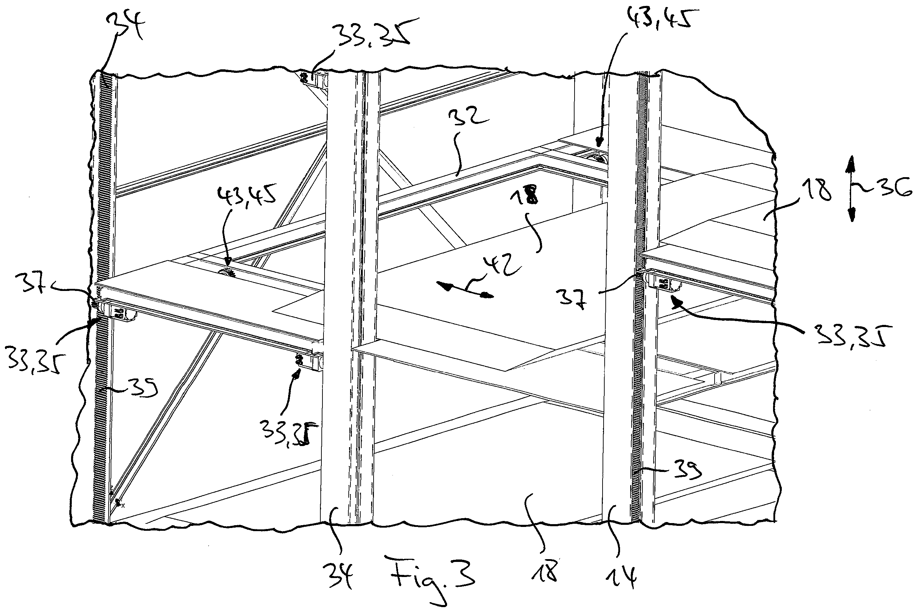

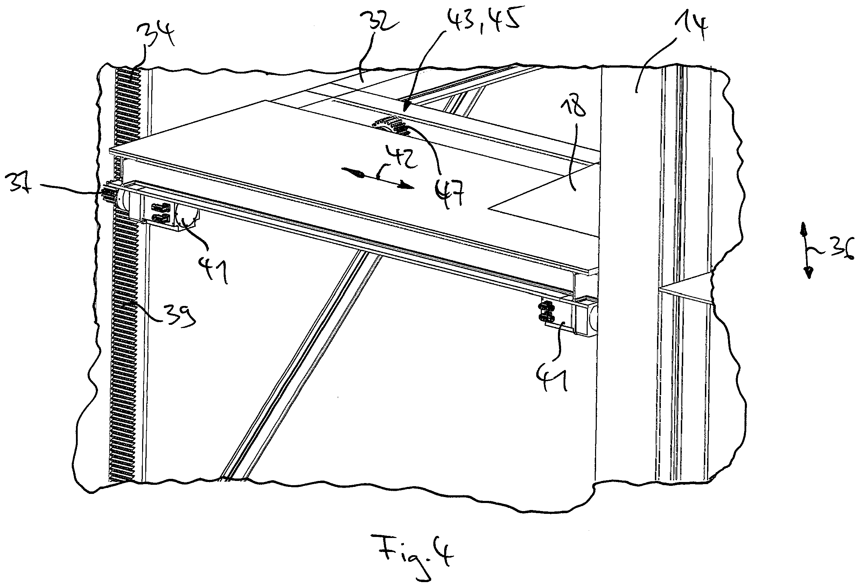

Um die Höhe der Lagerplätze 16 verändern zu können, weist die Lagereinrichtung 10 für jeden Lagerbodenrahmen 32 einen Lagerbodenvertikalantrieb 33 in Form eines Zahnstangenantriebs 35 auf. Ein derartiger Zahnstangenantrieb 35 ist in den Figuren 3 und 4 dargestellt. Der Lagerbodenvertikalantrieb 33 ist derart ausgelegt, dass die Lagerbodenrahmen 32 vertikal in Richtung des Doppelpfeils 36 unabhängig voneinander verlagert werden können. Hierzu weist der Zahnstangenantrieb 35 ein in den Figuren 3 und 4 gezeigtes Ritzel 37 auf, das in einer Zahnstange 39 kämmt. Ein derartiges Ritzel 37 wird jeweils von einem in den Figuren 3 und 4 gezeigten elektrischen Antrieb, insbesondere von einem Elektromotor 41 angetrieben. Insgesamt ist jeweils wenigstens ein Elektromotor 41 mit wenigstens einem Ritzel 37 an einem Lagerbodenrahmen 32 angeordnet.

Somit kann zur Einlagerung eines Bodenmoduls in einen Lagerplatz 16 eine Höhe 38 eines Lagerplatzes 16 verringert werden, wobei die Höhe 38 bspw. zur Einlagerung eines endmontierten Kraftfahrzeugs vergrößert werden kann. Durch Antreiben des Elektromotors 41 kann das Ritzel 37 in Rotation versetzt werden, so dass der Lagerbodenrahmen 32, der mit dem Elektromotor 41 verbunden ist, in Richtung der Zahnstange 39 bzw. in Richtung des Doppelpfeils 36 bewegt werden kann.

Die Lagereinrichtung 10 weist ferner einen Lagerbodenhorizontalantrieb 43 in Form eines Zahnstangenantriebs 45 auf, der derart ausgelegt ist, dass ein Lagerbodenelement 18 horizontal, d.h. in Richtung des Doppelpfeils 42 von der Hebeeinrichtung 24 bzw. von der Hubplattform 28 an einen Lagerplatz 16 bzw. auf einen Lagerbodenrahmen 32 verlagerbar ist. Ein derartiger Zahnstangenantrieb 45 ist in den Figuren 3 und 4 gezeigt.

Hierzu sind auf dem Lagerbodenelementen 18 in den Figuren nicht gezeigte Zahnstangen angeordnet sein, die parallel zur durch den Doppelpfeil 42 dargestellten Richtung angeordnet sind. Ferner sind an den Lagerbodenrahmen 32 und der Hubplattform 28 in den Zahnstangen kämmende Ritzel 47 angeordnet sein, die von einem elektrischen Antrieb, insbesondere von einem in den Figuren nicht gezeigten Elektromotor derart in Rotation versetzt werden können, dass die Lagerbodenelemente 18 in Richtung des Doppelpfeils 42 von der Hebeeinrichtung 24 bzw. von der Hubplattform 28 an einen Lagerplatz 16 auf einem Lagerbodenrahmen 32 verlagert werden können.

Die Lagereinrichtung 10 weist am Bodenelement 12 auf der der Tragstruktur 14 abgewandten Unterseite 44 eine Verfahreinrichtung 49 mit insgesamt sechs Schwenkantrieben 46 auf, die unabhängig voneinander ansteuerbar und/oder verschwenkbar sind, so dass die Lagereinrichtung 10 mittels der Schwenkantriebe 46 omnidirektional verfahrbar ist.

Die Lagereinrichtung 10 ist ferner zur Einbindung in ein in den Figuren nicht dargestelltes Materialflusssystem ausgelegt und weist hierzu eine Einrichtung zur Standortbestimmung und zur Lageerfassung, sowie Einrichtungen zur Datenübertragung mit einer Leitsteuerung eines Materialflusssystems auf.

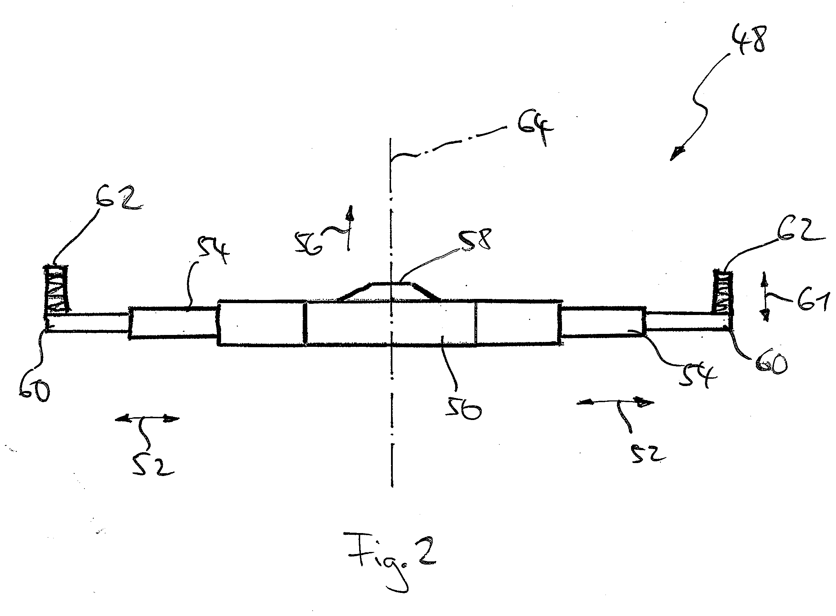

Zur Beladung weist die Lagereinrichtung 10 eine in Figur 2 schematisch gezeigte Beladeeinrichtung 48 auf. Die Beladeeinrichtung 48 ist zur Anordnung auf einem Lagerbodenelement 18 ausgebildet und kann auf einem Lagerbodenelement 18 befestigt werden. Dabei ist denkbar, dass die Beladeeinrichtung 48 auf einem Lagerbodenelement 18 verschraubt werden kann.

Die Beladeeinrichtung 48 weist einen Grundkörper 50 und gegenüber dem Grundkörper 50 in Richtung der Doppelpfeile 52 teleskopierbar ausfahrbare Teleskoparme 54 auf. Die Teleskoparme 54 sind in Längsrichtung des Grundkörpers 50 mittels eines Linearantriebs verlagerbar.

Die Beladeeinrichtung 48 weist einen orthogonal zu einer Längserstreckung des Grundkörpers 50 angeordneten und orthogonal zur Längserstreckung des Grundkörpers 50 in Richtung des Pfeils 56 ausfahrbaren Auflagedorn 58 auf. Der Dorn ist 58 zudem linear in Längsrichtung des Grundkörpers 50 verlagerbar. Ferner weist die Beladeeinrichtung 48 an den freien Enden 60 der Teleskoparme 54 orthogonal zur Längserstreckung des Grundkörpers 50, d.h. in Richtung des Pfeils 61 ausfahrbare Auflagezapfen 62 auf.

Die Beladeeinrichtung 48 kann ferner drehbar mit einem Lagerbodenelement 18 derart verbunden sein, dass eine Drehung der Beladeeinrichtung 48 um eine Drehachse 64 ermöglicht ist.

Die erfindungsgemäße selbstfahrende Lagereinrichtung 10 funktioniert nun wie folgt:
Wenn ein auf einem fahrerlosen Transportfahrzeug (FTF) angeordnetes Karosseriebauteil oder ein end- oder teilmontiertes Kraftfahrzeug zur Lagereinrichtung 10 verfahren wird, kann das Karosseriebauteil oder das end- oder teilmontierte Kraftfahrzeug mittels der Beladeeinrichtung 48 in einer Beladeposition der Hebeeinrichtung 24, d.h. wenn die Hubplattform 28 in Richtung des Bodenelements 12 nach unten verfahren ist, in die Lagereinrichtung 10 eingelagert werden.

Hierzu kann der Auflagedorn 58 in Anlage mit einem dafür vorgesehenen Auflagepunkt am Karosseriebauteil oder am end- oder teilmontierten Kraftfahrzeug zur Anlage gebracht werden, wobei dann Auflagezapfen des fahrerlosen Transportfahrzeugs (FTF) eingefahren werden können und die Auflagezapfen 62 der Beladeeinrichtung 48 ausgefahren werden können. Folglich kann eine Übergabe vom fahrerlosen Transportfahrzeug (FTF) auf die Beladeeinrichtung 48 der Lagereinrichtung 10 ermöglicht werden, so dass eine Beladung der Lagereinrichtung 10 ohne zusätzliche Kräne oder ähnliches ermöglicht werden kann.

Ein Karosseriebauteil oder ein end- oder teilmontiertes Kraftfahrzeug das auf einer Beladeeinrichtung 48 angeordnet ist, die wiederum auf einem Lagerbodenelement 18 angeordnet ist, kann dann mittels der Hebeeinrichtung 24 in eine Lagerposition vertikal verfahren werden und mittels des Lagerbodenhorizontalantriebs 43 horizontal an einen Lagerplatz 16 auf einem Lagerbodenrahmen 32 verschoben oder verlagert werden.

Aufgrund der Verfahreinrichtung 45 bzw. der Schwenkantriebe 46 kann die selbstfahrende Lagereinrichtung 10 in ein nicht dargestelltes Materialflusssystem integriert werden, das wenigstens ein fahrerloses Transportfahrzeug (FTF) zum Transport von Karosseriebauteilen von Kraftfahrzeugen, insbesondere von Bodenmodulen von Kraftfahrzeugen, oder von end- oder teilmontierten Kraftfahrzeugen umfasst.

## Patentansprüche

1. Selbstfahrende Lagereinrichtung (10) zum Einlagern und/oder zum Transport von insbesondere Karosseriebauteilen von Kraftfahrzeugen, insbesondere von Bodenmodulen von Kraftfahrzeugen, oder von end- oder teilmontierten Kraftfahrzeugen, mit einem Bodenelement (12) und einer auf dem Bodenelement (12) angeordneten Tragstruktur (14), die zur Aufnahme der Karosseriebauteile oder der end- oder teilmontierten Kraftfahrzeuge ausgelegt ist und eine Mehrzahl von Lagerplätzen (16) mit Lagerbodenelementen (18) aufweist, wobei die Lagereinrichtung (10) eine am Bodenelement (12) angeordnete Verfahreinrichtung (45) aufweist, die derart ausgelegt ist, dass die Lagereinrichtung (10) selbstfahrend, insbesondere flurgebunden, omnidirektional bewegt werden kann, **dadurch gekennzeichnet, dass** die Lagerbodenelemente verlagerbar sind, dass die Tragstruktur (14) einen Hebeturm (22) mit einer Hebeeinrichtung (24) zum vertikalen Verfahren der Lagerbodenelemente (18) und zwei auf jeweils gegenüberliegenden Seiten des Hebeturms (22) angeordnete Lagertürme (26) umfasst, wobei die Lagertürme (26) die Lagerplätze (16) aufweisen und pro Lagerturm (26) wenigstens ein Lagerbodenrahmen (32) vorgesehen ist und dass die Tragstruktur (14) vertikale Führungsschienen (34) zur Führung des Lagerbodenrahmens (32) aufweist, wobei wenigstens ein Lagerbodenvertikalantrieb (33) vorgesehen ist, der derart ausgelegt ist, dass der wenigstens eine Lagerbodenrahmen (32) im Lagerturm (26) vertikal verlagerbar ist und ein Lagerbodenhorizontalantrieb (43) vorgesehen ist, der derart ausgelegt ist, dass ein Lagerbodenelement (18) horizontal von der Hebeeinrichtung (24) an einen Lagerplatz (16) verlagerbar ist.

2. Lagereinrichtung (10) nach Anspruch 1, **dadurch gekennzeichnet, dass** der Lagerbodenvertikalantrieb(33) ein Zahnstangenantrieb (35) ist.

3. Lagereinrichtung (10) nach Anspruch 1 oder 2, **dadurch gekennzeichnet, dass** der Lagerbodenhorizontalantrieb (43) ein Zahnstangenantrieb (45) ist.

4. Lagereinrichtung (10) nach wenigstens einem der Ansprüche 1 bis 3, **dadurch gekennzeichnet, dass** die Hebeeinrichtung (24) eine Hubplattform (28) umfasst und derart ausgelegt ist, dass die Hubplattform (28) vertikal zwischen einer Beladeposition und wenigstens einer Lagerposition verfahrbar ist.

5. Lagereinrichtung (10) nach Anspruch 4, **dadurch gekennzeichnet, dass** die Hebeeinrichtung (24) einen Seil- oder Kettenantrieb aufweist.

6. Lagereinrichtung (10) nach Anspruch 4 oder 5, **dadurch gekennzeichnet, dass** der Hebeturm (22) Führungsschienen (30) zur Führung der Hubplattform (28) aufweist.

7. Lagereinrichtung (10) nach wenigstens einem der vorhergehenden Ansprüche, **dadurch gekennzeichnet, dass** die Verfahreinrichtung (45) zur Einbindung in ein Materialflusssystem ausgelegt ist.

8. Lagereinrichtung (10) nach wenigstens einem der vorhergehenden Ansprüche, **dadurch gekennzeichnet, dass** die Verfahreinrichtung (45) wenigstens drei Schwenkantriebe (46), vorzugsweise mindestens sechs Schwenkantriebe (46) aufweist.

9. Lagereinrichtung (10) nach Anspruch 8, **dadurch gekennzeichnet, dass** die Schwenkantriebe (46) unabhängig voneinander ansteuerbar und/oder verschwenkbar sind.

10. Lagereinrichtung (10) nach wenigstens einem der vorhergehenden Ansprüche, **dadurch gekennzeichnet, dass** die Lagereinrichtung (10) wenigstens eine Beladeeinrichtung (48) aufweist, die zur Anordnung auf einem Lagerbodenelement (18) ausgebildet ist.

11. Lagereinrichtung (10) nach Anspruch 10, **dadurch gekennzeichnet, dass** die Beladeeinrichtung (48) einen Grundkörper (50) und gegenüber dem Grundkörper (50) teleskopierbar ausfahrbare Teleskoparme (54) aufweist.

12. Lagereinrichtung (10) nach Anspruch 11, **dadurch gekennzeichnet, dass** die Beladeeinrichtung (48) einen orthogonal zu einer Längserstreckung des Grundkörpers (50) in einer Grundkörpermitte angeordneten und insbesondere orthogonal zur Längserstreckung ausfahrbaren Auflagedorn (58) aufweist und dass die Beladeeinrichtung (48) an den freien Enden (50) der Teleskoparme (54) orthogonal zur Längserstreckung des Grundkörpers (50) ausfahrbare Auflagezapfen (62) aufweist.

13. Materialflusssystem umfassend wenigstens ein fahrerloses Transportfahrzeug (FTF) zum Transport von insbesondere Karosseriebauteilen von Kraftfahrzeugen, insbesondere von Bodenmodulen von Kraftfahrzeugen, oder von end- oder teilmontierten Kraftfahrzeugen, und eine Lagereinrichtung (10) nach wenigstens einem der vorhergehenden Ansprüche.

## Claims

1. Self-driving storage device (10) for storing and/or for transporting in particular body components of motor vehicles, in particular floor modules of motor vehicles, or fully-assembled or partially-assembled motor vehicles, having a floor element (12) and a support structure (14) which is arranged on the floor element (12), is designed to receive the body components or the fully-assembled or partially-assembled motor vehicles and has a plurality of storage spaces (16) having storage floor elements (18), the storage device (10) comprising a movement device (45) which is arranged at the floor element (12) and is designed such that the storage device (10) can be moved omnidirectionally in a self-driving manner, in particular in a floor-bound manner, **characterized in that** the storage floor elements are displaceable, **in that** the support structure (14) comprises a lifting tower (22) having a lifting device (24) for vertically moving the storage floor elements (18) and two storage towers (26) which are arranged on respective opposite sides of the lifting tower (22), the storage towers (26) having the storage spaces (16) and at least one storage floor frame (32) being provided per storage tower (26), and **in that** the support structure (14) has vertical guide rails (34) for guiding the storage floor frame (32), at least one storage floor vertical drive (33) being provided, which is designed such that the at least one storage floor frame (32) in the storage tower (26) is vertically displaceable and a storage floor horizontal drive (43) is provided, which is designed such that a storage floor element (18) is horizontally displaceable to a storage space (16) by means the lifting device (24).

2. Storage device (10) according to claim 1, **characterized in that** the storage floor vertical drive (33) is a rack-and-pinion drive (35).

3. Storage device (10) according to claim 1 or claim 2, **characterized in that** the storage floor horizontal drive (43) is a rack-and-pinion drive (45).

4. Storage device (10) according to at least one of claims 1 to 3, **characterized in that** the lifting device (24) comprises a lifting platform (28) and is designed such that the lifting platform (28) is vertically movable between a loading position and at least one storage position.

5. Storage device (10) according to claim 4, **characterized in that** the lifting device (24) has a cable drive or chain drive.

6. Storage device (10) according to claim 4 or claim 5, **characterized in that** the lifting tower (22) has guide rails (30) for guiding the lifting platform (28).

7. Storage device (10) according to at least one of the preceding claims, **characterized in that** the movement device (45) is designed to be integrated into a material flow system.

8. Storage device (10) according to at least one of the preceding claims, **characterized in that** the movement device (45) has at least three pivot drives (46), preferably at least six pivot drives (46).

9. Storage device (10) according to claim 8, **characterized in that** the pivot drives (46) are controllable and/or pivotable independently of one another.

10. Storage device (10) according to at least one of the preceding claims, **characterized in that** the storage device (10) has at least one loading device (48) which is designed to be arranged on a storage floor element (18).

11. Storage device (10) according to claim 10, **characterized in that** the loading device (48) has a main part (50) and telescopic arms (54) which are telescopically extendable relative to the main part (50).

12. Storage device (10) according to claim 11, **characterized in that** the loading device (48) has a bearing bolt (58) which is arranged orthogonally to a longitudinal extension of the main part (50) in a main part center and is in particular extendable orthogonally to the longitudinal extension, and **in that** the loading device (48) has, at the free ends (50) of the telescopic arms (54), bearing pins (62) which are extendable orthogonally to the longitudinal extension of the main part (50).

13. Material flow system comprising at least one automated guided vehicle (AGV) for transporting in particular body components of motor vehicles, in particular floor modules of motor vehicles, or fully assembled or partially assembled motor vehicles, and a storage device (10) according to at least one of the preceding claims.

## Revendications

1. Dispositif de stockage autonome (10) destiné à stocker et/ou à transporter en particulier des composants de carrosserie de véhicules automobiles, en particulier des modules de fond de véhicules automobiles, ou des véhicules automobiles finalement ou partiellement assemblés, comprenant un élément de fond (12) et une structure de support (14) agencée sur ledit élément de fond (12), qui est conçue pour recevoir lesdits composants de carrosserie ou lesdits véhicules automobiles finalement ou partiellement assemblés et qui comprend une pluralité d'espaces de stockage (16) ayant des éléments de fond de stockage (18), dans lequel le dispositif de stockage (10) présente un dispositif de déplacement (45) qui est disposé sur l'élément de fond (12) et qui est conçu de telle sorte que le dispositif de stockage (10) peut être déplacé de façon autonome, en particulier liée au sol, et omnidirectionnelle, **caractérisé par le fait que** les éléments de fond de stockage sont déplaçables, que la structure de support (14) présente une tour de levage (22) comprenant un dispositif de levage (24) pour le déplacement vertical des éléments de fond de stockage (18), ainsi que deux tours de stockage (26) qui sont agencées sur des côtés respectivement opposés de la tour de levage (22), dans lequel les tours de stockage (26) présentent lesdits espaces de stockage (16) et au moins un cadre de fond de stockage (32) est prévu par tour de stockage (26), et que la structure de support (14) comprend des rails de guidage verticaux (34) destinés à guider le cadre de fond de stockage (32), dans lequel au moins un mécanisme d'entraînement vertical de fond de stockage (33) est prévu qui est conçu de manière à ce que ledit au moins un cadre de fond de stockage (32) puisse être déplacé verticalement dans la tour de stockage (26), et qu'un mécanisme d'entraînement horizontal de fond de stockage (43) est prévu qui est conçu de telle sorte qu'un élément de fond de stockage (18) peut être déplacé horizontalement par le dispositif de levage (24) vers un espace de stockage (16).

2. Dispositif de stockage (10) selon la revendication 1, **caractérisé par le fait que** le mécanisme d'entraînement vertical de fond de stockage (33) est un entraînement à crémaillère (35).

3. Dispositif de stockage (10) selon la revendication 1 ou 2, **caractérisé par le fait que** le mécanisme d'entraînement horizontal de fond de stockage (43) est un entraînement à crémaillère (45).

4. Dispositif de stockage (10) selon l'une au moins des revendications 1 à 3, **caractérisé par le fait que** le dispositif de levage (24) comprend une plateforme élévatrice (28) et est conçu de telle sorte que la plateforme élévatrice (28) peut être déplacée verticalement entre une position de chargement et au moins une position de stockage.

5. Dispositif de stockage (10) selon la revendication 4, **caractérisé par le fait que** le dispositif de levage (24) présente un mécanisme d'entraînement par câble ou par chaîne.

6. Dispositif de stockage (10) selon la revendication 4 ou 5, **caractérisé par le fait que** la tour de levage (22) comprend des rails de guidage (30) destinés à guider la plateforme élévatrice (28).

7. Dispositif de stockage (10) selon l'une au moins des revendications précédentes, **caractérisé par le fait que** le dispositif de déplacement (45) est conçu pour être intégré à un système d'écoulement des produits.

8. Dispositif de stockage (10) selon l'une au moins des revendications précédentes, **caractérisé par le fait que** le dispositif de déplacement (45) présente au moins trois mécanismes d'entraînement de pivotement (46), de préférence au moins six mécanismes d'entraînement de pivotement (46).

9. Dispositif de stockage (10) selon la revendication 8, **caractérisé par le fait que** les mécanismes d'entraînement de pivotement (46) peuvent être commandés et/ou pivotés de manière indépendante les uns des autres.

10. Dispositif de stockage (10) selon l'une au moins des revendications précédentes, **caractérisé par le fait que** le dispositif de stockage (10) présente au moins un dispositif de chargement (48) qui est conçu pour être disposé sur un élément de fond de stockage (18).

11. Dispositif de stockage (10) selon la revendication 10, **caractérisé par le fait que** le dispositif de chargement (48) comprend un corps de base (50) et des bras télescopiques (54) aptes à être sortis de manière télescopique par rapport au corps de base (50).

12. Dispositif de stockage (10) selon la revendication 11, **caractérisé par le fait que** le dispositif de chargement (48) présente un mandrin d'appui (58) qui est disposé de façon orthogonale à une extension longitudinale du corps de base (50) dans un centre du corps de base et, en particulier, peut être sorti de façon orthogonale à l'extension longitudinale, et que le dispositif de chargement (48) présente des broches d'appui (62) aux extrémités (50) libres des bras télescopiques (54), qui peuvent être sorties de façon orthogonale à l'extension longitudinale du corps de base (50).

13. Système d'écoulement des produits comprenant au moins un véhicule de transport autoguidé (AGV) destiné à transporter en particulier des composants de carrosserie de véhicules automobiles, en particulier des modules de fond de véhicules automobiles, ou des véhicules automobiles finalement ou partiellement assemblés, et un dispositif de stockage (10) selon l'une au moins des revendications précédentes.
